# EUROPEAN PATENT APPLICATION

(11) **EP 4 465 028 A1**
(43) Date of publication of application: **20.11.2024**
(21) Application number: 22920550.5
(22) Date of filing: 14.12.2022
(51) Int. Cl.: G01N 23/04, G01N 23/18, G06T 7/00

(54) **INFORMATION PROCESSING DEVICE, METHOD, AND PROGRAM**

(30) Priority: 14.01.2022 JP 2022004406
(71) Applicant: FUJIFILM Corporation, Tokyo 106-8620 (JP)
(72) Inventor: TAIRA, Mitsutoshi, Tokyo 106-8620 (JP); YONAHA, Makoto, Tokyo 106-8620 (JP); TANAKA, Eiichi, Tokyo 106-8620 (JP); INAGI, Seiya, Tokyo 106-8620 (JP); IKEDA, Haruka, Tokyo 106-8620 (JP)
(74) Representative: Meissner Bolte Partnerschaft mbB
(86) International application number: PCT/JP2022/045980
(87) International publication number: WO 2023/136032

(57) **Abstract**

Provided are an information processing apparatus, an information processing method, and an information processing program with which a state of a manufactured component can be accurately understood. An information processing apparatus includes a processor, in which the processor acquires first information including information on severity of a discontinuity obtained by analyzing an image obtained by imaging an object, calculates a distribution of the severity of the discontinuity based on the first information, acquires information on a threshold value of a defect, generates second information in which the distribution of the severity of the discontinuity and the threshold value are displayed, and displays the second information on a display device.

## Description

### BACKGROUND OF THE INVENTION

### 1. Field of the Invention

The present disclosure relates to an information processing apparatus, an information processing method, and an information processing program, and particularly to an information processing apparatus, an information processing method, and an information processing program for processing information obtained by non-destructive testing.

### 2. Description of the Related Art

As a technology of detecting a harmful discontinuity of a target without destroying the target, non-destructive testing (NDT) is known. In addition, as one non-destructive testing, a radiographic testing (RT) is known.

WO2020/003917A describes a technology of automatically detecting a defect from a radiation transmission image and displaying the defect. In addition, WO2020/003917A describes that a detection frequency distribution for each size of the defect is displayed.

### SUMMARY OF THE INVENTION

Meanwhile, in a casting component, an internal defect is almost irreparable, and in a case in which the defect is detected, the casting component is disposed of as waste, which leads to a large loss. In particular, in a case of an aviation component, a large loss is incurred because the cost is high. Therefore, it is important to increase the yield in a manufacturing process.

As in WO2020/003917A, it is possible to understand an occurrence status of the defect by displaying the detection frequency distribution for each size of the defect. However, in this case, it is not possible to understand the state of the manufactured component before the defect occurs.

One embodiment according to the technology of the present disclosure provides an information processing apparatus, an information processing method, and an information processing program with which a state of a manufactured component can be accurately understood.
(1) An information processing apparatus comprising: a processor, in which the processor acquires first information including information on severity of a discontinuity obtained by analyzing an image obtained by imaging an object, calculates a distribution of the severity of the discontinuity based on the first information, acquires information on a threshold value of a defect, generates second information in which the distribution of the severity of the discontinuity and the threshold value are displayed, and displays the second information.
(2) The information processing apparatus according to (1), in which the processor generates the second information by generating a graph showing the distribution of the severity of the discontinuity, and indicating a position of the threshold value on the graph.
(3) The information processing apparatus according to (2), in which the processor calculates a curve showing the distribution of the severity of the discontinuity by using curve regression.
(4) The information processing apparatus according to (2) or (3), in which the processor calculates a histogram showing the distribution of the severity of the discontinuity.
(5) The information processing apparatus according to any one of (1) to (4), in which the processor calculates a distribution of a peak closest to the threshold value in a case in which the distribution of the severity of the discontinuity has multimodality.
(6) The information processing apparatus according to any one of (1) to (5), in which the processor acquires the first information of a plurality of the objects, receives designation of the object of which the second information is to be displayed, and displays the second information of the designated object.
(7) The information processing apparatus according to (6), in which the processor receives designation of the plurality of objects, and generates the second information in which the distributions of the severity of the discontinuity of the designated plurality of objects are displayed.
(8) The information processing apparatus according to (6) or (7), in which the first information includes information on a date and time at which the object is tested or manufactured or a number for identifying the object, and the processor receives designation of the object of which the second information is to be displayed by using the date and time or the number.
(9) The information processing apparatus according to (8), in which the processor displays a slider, and displays the second information by switching the second information in a date-and-time order or in a number order in response to movement of the slider.
(10) The information processing apparatus according to (8) or (9), in which the processor estimates a distribution of the severity of the discontinuity at a specific point in time in future based on the first information of the plurality of objects, and generates the second information in which the estimated distribution of the severity of the discontinuity at the specific point in time in future is displayed.
(11) The information processing apparatus according to (9) or (10), in which the processor receives designation of a specific point in time in future, and estimates a distribution of the severity of the discontinuity at the designated point in time.
(12) The information processing apparatus according to any one of (1) to (11), in which the first information includes information on severity for each type of the discontinuity for a plurality of types of the discontinuities, and the processor calculates a distribution of the severity for each type of the discontinuity based on the first information, receives designation of the type of the discontinuity to be displayed, and generates the second information in which the distribution of the severity of the designated type of the discontinuity and the threshold value are displayed.
(13) The information processing apparatus according to any one of (1) to (12), in which the first information includes information on a plurality of types of the severity, and the processor acquires information on a threshold value of a defect for each type of the severity, calculates a distribution for each type of the severity based on the first information, receives designation of the type of the severity to be displayed, and generates the second information in which the distribution of the severity of the designated type and the threshold value are displayed.
(14) The information processing apparatus according to any one of (1) to (13), in which the first information includes the image, and the processor generates the second information in which the image is further displayed.
(15) The information processing apparatus according to (14), in which the first information includes information on an occurrence area of the discontinuity, and the processor displays the information indicating the occurrence area of the discontinuity on the image.
(16) The information processing apparatus according to (15), in which the first information includes information on an occurrence area for each type of the discontinuity, and the processor displays the information indicating the occurrence area of the discontinuity on the image in different aspects for each type of the discontinuity.
(17) The information processing apparatus according to any one of (1) to (16), in which the image is a radiation transmission image.
(18) The information processing apparatus according to any one of (1) to (17), in which a type of the discontinuity is any of a gas hole, a porosity, an FMLD, or an FMMD.
(19) The information processing apparatus according to any one of (1) to (18), in which the severity of the discontinuity is any of a length, an area, a degree of distortion, a sharpness of a shape, or a density of the discontinuity.
(20) An information processing method comprising: a step of acquiring first information including information on severity of a discontinuity obtained by analyzing an image obtained by imaging an object; a step of calculating a distribution of the severity of the discontinuity based on the first information; a step of acquiring information on a threshold value of a defect; a step of generating second information in which the distribution of the severity of the discontinuity and the threshold value are displayed; and a step of displaying the second information.
(21) An information processing program causing a computer to realize: a function of acquiring first information including information on severity of a discontinuity obtained by analyzing an image obtained by imaging an object; a function of calculating a distribution of the severity of the discontinuity based on the first information; a function of acquiring information on a threshold value of a defect; a function of generating second information in which the distribution of the severity of the discontinuity and the threshold value are displayed; and a function of displaying the second information.
(22) A non-transitory computer-readable recording medium on which the program according to (21) is recorded.

According to the present disclosure, the state of the manufactured component can be accurately understood, and the improvement in a manufacturing process, a design process, and the like can be contributed.

### BRIEF DESCRIPTION OF THE DRAWINGS

Fig. 1 is a diagram showing an example of a system configuration of an X-ray testing system.
Fig. 2 is a diagram showing an example of an X-ray transmission image.
Figs. 3A to 3C are conceptual diagrams of measurement of a length of a discontinuity.
Fig. 4 is a diagram showing an example of an extraction result of the discontinuity.
Fig. 5 is a diagram showing an example of a detection result of the discontinuity.
Fig. 6 shows an example of a hardware configuration of the information processing apparatus.
Fig. 7 is a block diagram of main functions of the information processing apparatus.
Fig. 8 is a diagram showing an example of a histogram and a distribution curve.
Fig. 9 is a diagram showing an example of display data.
Figs. 10Ato 10C are diagrams showing an example of a change in a distribution graph.
Fig. 11 is a diagram showing an example of the display data in a case in which an automatic play function is provided.
Fig. 12 is a diagram showing an example of the display data in a case in which a function of displaying distribution data for each type of the discontinuity is provided.
Fig. 13 is a diagram showing an example of the display data in a case in which a testing image is displayed.
Fig. 14 is a diagram showing another example of the display data in a case in which the testing image is displayed.
Fig. 15 is a diagram showing an example of the display data in a case in which a function of displaying an occurrence area is provided for each type of the discontinuity.
Fig. 16 is a diagram showing an example of the display data in a case in which a function of selecting a distribution to be displayed is provided.
Fig. 17 is a conceptual diagram of processing of calculating the distribution curve of partial data closest to a reference value of a defect.
Fig. 18 is a diagram showing an example of the display data in a case in which a function of displaying the distribution data for each type of severity of the discontinuity is provided.
Fig. 19 is a diagram showing an example of the display data in a case in which a comparative observation function is provided.
Fig. 20 is a block diagram of main functions of the information processing apparatus.
Fig. 21 is a diagram showing an example of the display data.

### DESCRIPTION OF THE PREFERRED EMBODIMENTS

Hereinafter, preferred embodiments for carrying out the present invention will be described with reference to the accompanying drawings.

### [First embodiment]

Here, as an example, a case will be described in which the present invention is applied to an industrial X-ray testing system for non-destructive testing of an object. In addition, here, as an example, a case will be described in which the machine components of the same type are continuously manufactured and sequentially tested. The machine component is, for example, a machine component obtained by casting or forging, or a welded machine component. In the present embodiment, the machine component to be tested is an example of an object.

### [System configuration]

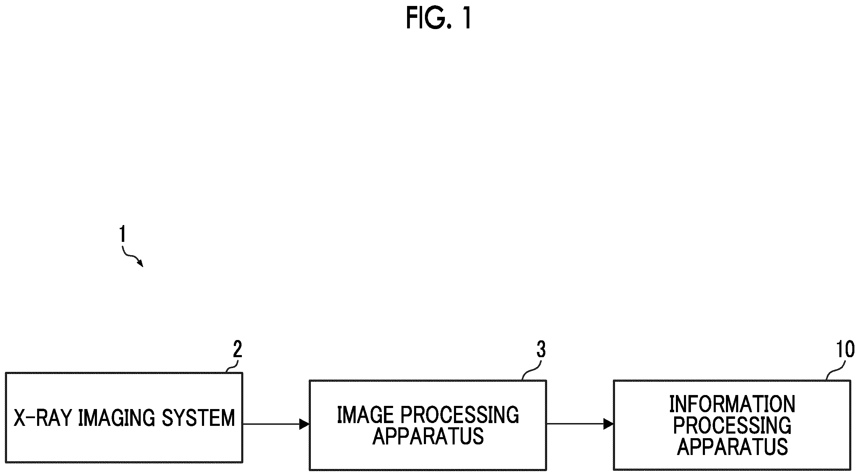

Fig. 1 is a diagram showing an example of a system configuration of the X-ray testing system.

As shown in Fig. 1, an X-ray testing system 1 according to the present embodiment includes an X-ray imaging system 2, an image processing apparatus 3, and an information processing apparatus 10.

### [X-ray imaging system]

The X-ray imaging system 2 captures an X-ray transmission image of a testing object. The X-ray transmission image is an example of a radiation transmission image. Since capturing the transmission image using the X-rays itself is a known technology, the description thereof will be omitted. For example, a configuration can be adopted in which the imaging is performed using a flat panel detector (FPD), a digital detector array (DDA), or the like. In addition, a configuration in which the imaging is performed using an imaging plate (IP), a configuration in which the imaging is performed using an X-ray film, or the like can also be adopted. In a case of imaging using the IP, the image recorded on the IP is converted into digital data by a scanner (IP scanner). In addition, in a case of imaging using the X-ray film, the image recorded on the film is converted into digital data by a film digitizer or the like. In this way, the captured image is acquired as the digital data.

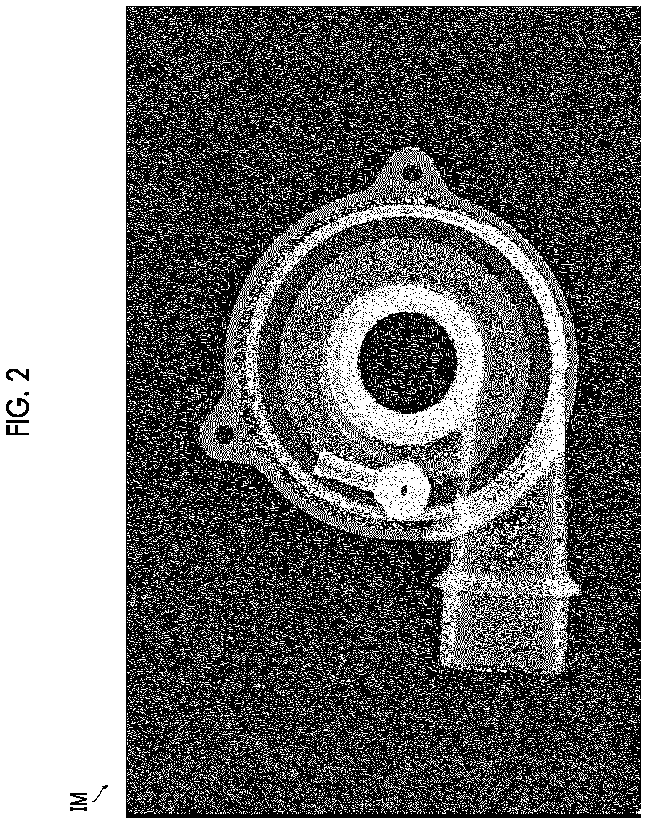

Fig. 2 is a diagram showing an example of the X-ray transmission image. An X-ray transmission image IM shown in Fig. 2 is an image obtained by imaging a turbine housing of a turbocharger.

The imaging is basically performed in a manufacturing order of the testing object. The captured X-ray transmission image (testing image) is provided to the image processing apparatus 3 in association with information for identifying the testing object. The information for identifying the testing object includes a part number, a serial number, a manufacturing date and time, and the like. The part number is a number for specifying a type of a product (machine component). Therefore, the same part number is assigned to the same type of the product. The serial number is a unique identification number assigned to the same type of product for each product. The serial number is assigned in the manufacturing order. Therefore, as the number is smaller, the manufacturing date and time are older.

The method of providing the image data to the image processing apparatus 3 is not particularly limited. A configuration may be adopted in which the X-ray imaging system 2 and the image processing apparatus 3 are connected to each other in a communicable manner, to sequentially transmit the image data obtained by the imaging, or a configuration may be adopted in which the image data is stored in a medium and provided.

### [Image processing apparatus]

The image processing apparatus 3 analyzes the testing image to detect a discontinuity existing in the object. In addition, the detected discontinuities are individually measured, and the acceptance/unacceptance of the discontinuity is determined.

Here, the "discontinuity" in the present specification refers to an imperfection or a discontinuity determined from the result of the testing. The "imperfection" refers to a portion in which the quality characteristic deviates from an intended state. The "discontinuity" refers to a portion in which the continuity of a tissue, a material, or a shape is interrupted. The discontinuity includes an acceptable discontinuity and an unacceptable discontinuity. Among the discontinuities, a discontinuity which does not satisfy the acceptable criterion defined by a defect standard, specifications, or the like and is unacceptable is called a "defect".

The image processing apparatus 3 is realized by, for example, a combination of a computer and software. The software is synonymous with "program". The computer may be a workstation, a personal computer, or a tablet terminal.

In the present embodiment, the discontinuity is detected from the testing image, and a length thereof is measured. A region estimated as the discontinuity is extracted from the testing image as the discontinuity.

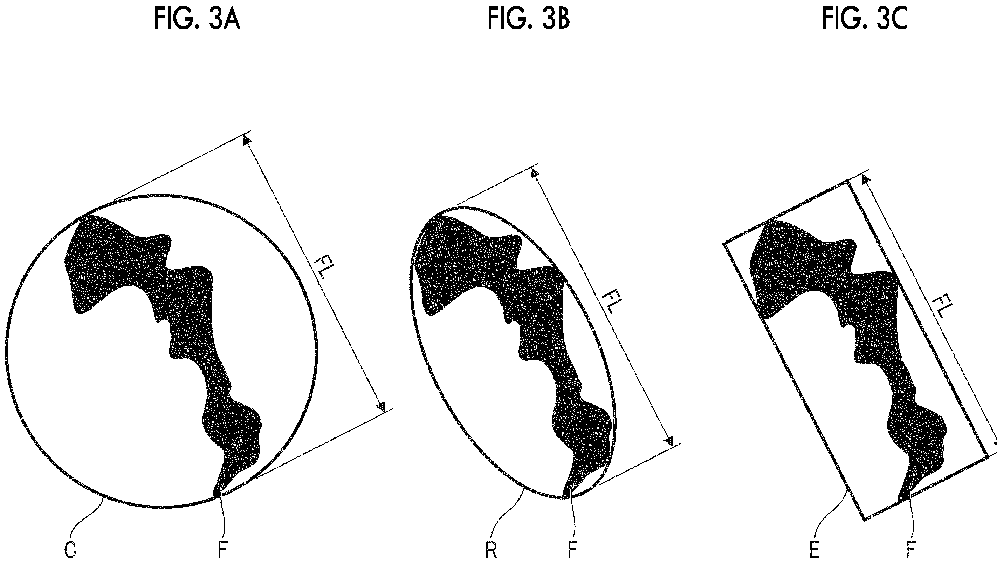

Fig. 3 is a conceptual diagram of the measurement of the length of the discontinuity. Various methods can be adopted for the measurement of the length of the discontinuity. Fig. 3A is a conceptual diagram of the measurement in a case in which a diameter of a circle circumscribing the discontinuity is the length of the discontinuity. Fig. 3B is a conceptual diagram of the measurement in a case in which a major axis of an ellipse circumscribing the discontinuity is the length of the discontinuity. Fig. 3C is a conceptual diagram of the measurement in a case in which a length of a long side of a rectangle circumscribing the discontinuity is the length of the discontinuity.

In a case in which the diameter of the circle circumscribing the discontinuity is the length of the discontinuity, as shown in Fig. 3A, a circle C circumscribing the discontinuity F is obtained, and the diameter thereof is measured. The circumscribing circle C is obtained by fitting a circle. A known image measurement method is adopted for the measurement of the diameter.

In a case in which the major axis of the ellipse circumscribing the discontinuity is the length of the discontinuity, as shown in Fig. 3B, the ellipse R circumscribing the discontinuity F is obtained, and the major axis of the ellipse R is measured. The circumscribing ellipse R is obtained by fitting an ellipse. A known image measurement method is adopted for the measurement of the major axis.

The length of the long side of the rectangle circumscribing the discontinuity is a so-called maximum Feret's diameter. In a case in which the length of the long side of the rectangle circumscribing the discontinuity is the length of the discontinuity, as shown in Fig. 3C, a rectangle E circumscribing the discontinuity is obtained, and the length of the long side is measured. The circumscribing rectangle E is obtained by fitting a rectangle. A known image measurement method is adopted for the measurement of the length of the long side.

Additionally, a length (width) in a specific direction can be measured as the length of the discontinuity. For example, a length of an image in a horizontal direction (left-right direction) or a length of the image in a vertical direction (up-down direction) can be measured for all the discontinuities, and the length of each discontinuity can be used.

As an example, in the present embodiment, the major axis of the ellipse circumscribing the discontinuity is measured as the length of the discontinuity. In the present embodiment, the length of the discontinuity is an example of severity of a discontinuity.

In the determination of the acceptance/unacceptance, the measured length of the discontinuity is compared with a threshold value (reference value of the defect), and the discontinuity having a length equal to or longer than the threshold value is determined as the unacceptable discontinuity, that is, as a "defect".

The discontinuity is detected by specifying a position of the discontinuity in the testing image. In addition, the discontinuity is detected by specifying the type.

The position of the discontinuity is specified, for example, by using a position of a centroid of the region detected as the discontinuity. In addition, the position of the discontinuity can also be specified at a position of the center of the circle, the ellipse, or the rectangle circumscribing the region detected as the discontinuity. In addition, the position in the testing image is specified by using coordinates (x,y) set in the testing image. The coordinates are set, for example, by setting a left upper corner of the testing image as an origin (0,0), and setting the horizontal direction as an x-axis direction and the vertical direction as a y-axis direction.

The types of the discontinuities are, for example, a gas hole, a porosity, a foreign material less dense (FMLD), and a foreign material more dense (FMMD). The gas hole is a spherical cavity. The porosity is a cavity generated by incorporating a gas. The FMLD is a general term for the foreign material less dense. The foreign material less dense appears black in the X-ray transmission image. For example, a chip portion, a portion in which a casting metal is insufficiently poured, a portion that is damaged and worn, and the like appear darker (black) than the surroundings. In addition, a portion in which air bubbles, gas, or the like is mixed also appears darker than the surroundings. The FMMD is a general term for the foreign material more dense. The foreign material more dense appears white in the X-ray transmission image. For example, in a case of a component made of aluminum, a portion that is excessively raised during a casting process, a portion to which scattered metal adheres, a portion in which an impurity having a higher density than aluminum is buried inside, and the like are difficult to transmit X-rays, so that these portions appear brighter (whiter) than the surroundings.

The detection of the discontinuity can be performed by using, for example, artificial intelligence (AI). As an example, the detection can be performed using a segmentation model. The segmentation model is a learning model that has been trained through machine learning to execute a task of image segmentation. The segmentation model performs classification on an input image as to whether or not the entire image (all pixels) is a region of the discontinuity in units of one pixel, and performs the region division. In the present embodiment, the model is configured to classify what type of the discontinuity is for each pixel and perform the region division. The segmentation model SM is configured by using, for example, a convolutional neural network (CNN) having a convolutional layer. A fully convolution network (FCN), which is a type of the CNN, is one of models suitable for the task of image segmentation.

The segmentation model is trained through machine learning using a training data set, whereby the parameters are optimized. The training data set includes a large number of training data in which a training image and correct answer data for the training image are associated with each other. The "correct answer data" here is data indicating the region of the discontinuity existing in the image. The correct answer data includes, for example, a mask image in which the region of the discontinuity is filled.

The segmentation model generates a score indicating the certainty of the classification, that is, the discontinuity certainty for each pixel in the image, for the input image. A segmentation mask is generated based on the score generated by the segmentation model. The segmentation mask is a mask image in which the region of the discontinuity in the image is filled. The segmentation mask represents the shape of the extracted discontinuity in units of pixels.

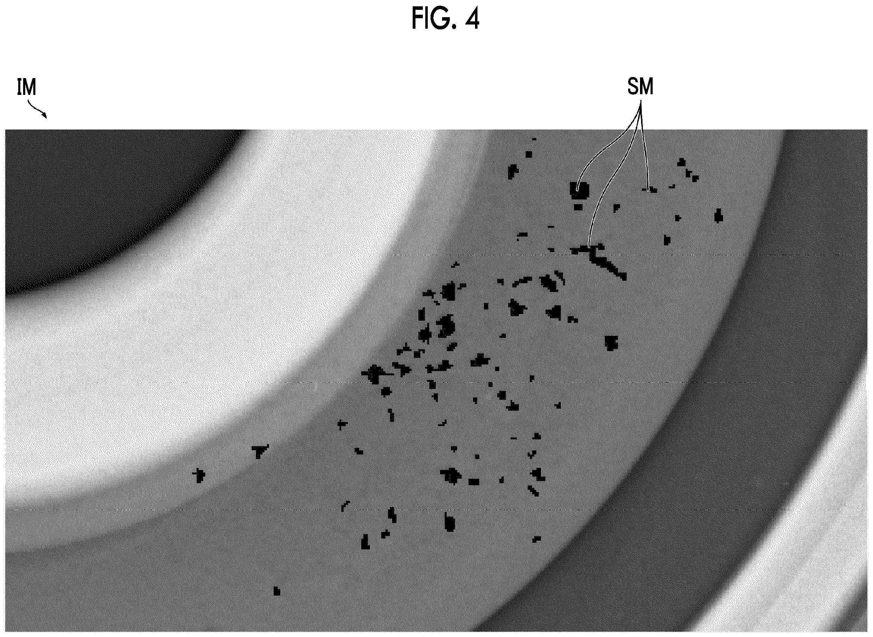

Fig. 4 is a diagram showing an example of an extraction result of the discontinuity.

Fig. 4 is an enlarged view of a part of the testing image IM. A black region in the image is a segmentation mask SM and indicates the region of the extracted discontinuity.

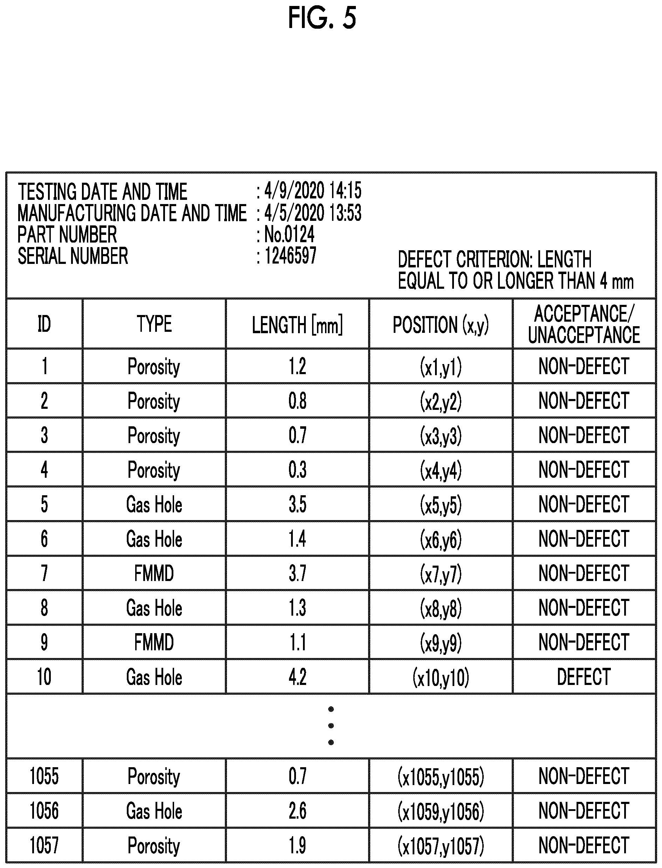

Fig. 5 is a diagram showing an example of a detection result of the discontinuity.

As shown in Fig. 5, an identification number (ID number) is individually assigned to the detected individual discontinuities, and a detection result of "type", "length", and "position (coordinates)" and a determination result of "acceptance/unacceptance" are shown for each discontinuity.

Fig. 5 shows an example of a case in which 1057 discontinuities are detected in total. In addition, Fig. 5 shows an example of a case in which the reference value of the defect is set to a length equal to or longer than 4 mm. In this case, a discontinuity having a length equal to or longer than 4 mm is determined as the unacceptable discontinuity, that is, the defect.

The processing via the image processing apparatus 3 is basically performed in an imaging order of the testing object. It should be noted that, since the imaging is performed in the manufacturing order in principle, the processing via the image processing apparatus 3 is also performed in the manufacturing order in principle.

The processing result (detection result of the discontinuity) via the image processing apparatus 3 is provided to the information processing apparatus 10 in association with information for identifying the testing object (part number, serial number, manufacturing date and time, and the like), information for identifying the testing, and the testing image. The information for identifying the testing includes information such as the testing number and the testing date and time. The testing number is a unique identification number for specifying the testing object. The testing date and time is, for example, the date and time at which the image analysis is performed on the testing image. The detection result of the discontinuity includes data of the segmentation mask.

In addition, the information provided to the information processing apparatus 10 includes information on an acceptance/unacceptance determination criterion (reference value of the defect). In the present embodiment, the information (hereinafter, referred to as "testing data") provided from the image processing apparatus 3 to the information processing apparatus 10 is an example of first information.

The method of providing the testing data to the information processing apparatus 10 is not particularly limited. A configuration may be adopted in which the image processing apparatus 3 and the information processing apparatus 10 are connected to each other in a communicable manner, to sequentially transmit the testing data, or a configuration may be adopted in which the testing data is stored in a medium and provided.

### [Information processing apparatus]

The information processing apparatus 10 acquires the discontinuity testing data, processes the discontinuity testing data into a format in which the state of the manufactured component is easy to understand, and presents the discontinuity testing data to a user.

The information processing apparatus 10 is realized by, for example, a combination of a computer and software.

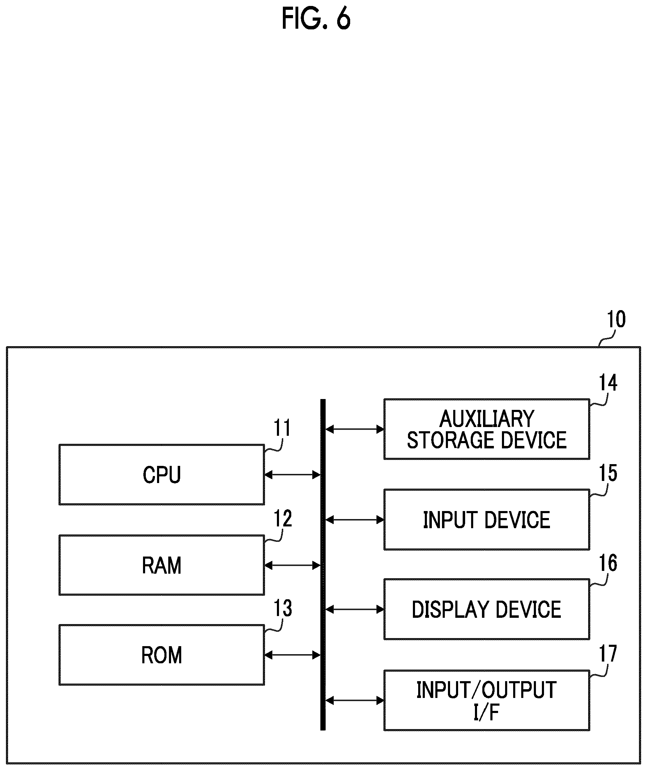

Fig. 6 is a diagram showing an example of a hardware configuration of the information processing apparatus.

As shown in Fig. 6, the information processing apparatus 10 comprises a central processing unit (CPU) 11, a random access memory (RAM) 12, a read only memory (ROM) 13, an auxiliary storage device 14, an input device 15, a display device 16, an input/output interface (I/F) 17, and the like as the hardware configuration.

The auxiliary storage device 14 is configured by, for example, a hard disk drive (HDD) and a solid state drive (SSD). A program executed by the CPU 11, data necessary for processing, and the like are stored in the auxiliary storage device 14. The input device 15 is configured by, for example, a keyboard, a mouse, and a touch panel. The display device 16 is configured by, for example, a display such as a liquid crystal display (LCD) or an organic electro-luminescence (OEL) display. The testing data is taken into the information processing apparatus 10 via the input/output interface 17.

In the present embodiment, the CPU 11 is an example of a processor. The RAM 12, the ROM 13, and the auxiliary storage device 14 are examples of a memory.

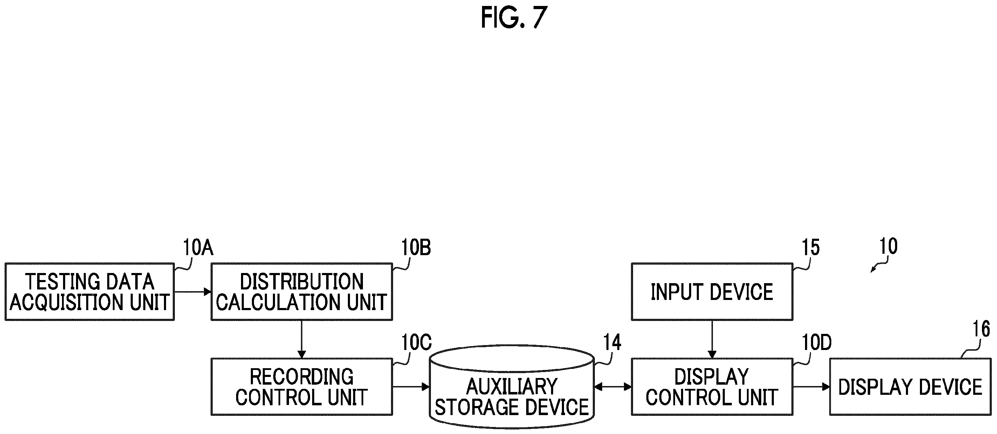

Fig. 7 is a block diagram of main functions of the information processing apparatus.

As shown in Fig. 7, the information processing apparatus 10 has functions of a testing data acquisition unit 10A, a distribution calculation unit 10B, a recording control unit 10C, a display control unit 10D, and the like. Each function is realized by the CPU 11 executing a predetermined program (information processing program).

The testing data acquisition unit 10A acquires the testing data. As described above, the testing data includes the information on the detection result of the discontinuity (type of discontinuity, length of discontinuity, position (coordinates), acceptance/unacceptance determination result, data of the segmentation mask, and the like) obtained by analyzing the testing image, the information for identifying the testing object (part number, serial number, manufacturing date and time, and the like), the information for identifying the testing (testing date and time, and the like), the testing image, and the information on the acceptance/unacceptance determination criterion (reference value of defect). The testing data is acquired, for example, via the input/output interface 17.

The distribution calculation unit 10B calculates a distribution of the severity of the discontinuity based on the acquired testing data. The distribution is a distribution of the detection frequency (the number of detections) for each severity of the discontinuity. In the present embodiment, the severity of the discontinuity is obtained as the information on the length of the discontinuity. Therefore, the distribution of the detection frequency for each length of the discontinuity is calculated. In particular, in the present embodiment, a histogram and a distribution curve showing the distribution of the frequency for each length of the discontinuity are calculated.

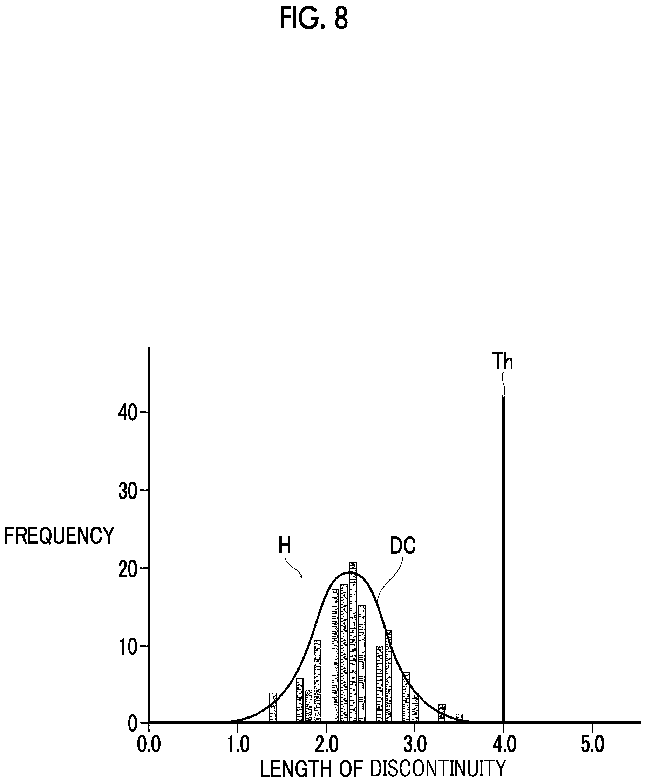

Fig. 8 is a diagram showing an example of the histogram and the distribution curve.

A histogram H is one of the graphs showing the frequency distribution. In Fig. 8, a horizontal axis represents the length of the discontinuity, and a vertical axis represents the detection frequency for each length of the discontinuity. In the example shown in Fig. 8, a section of the horizontal axis is set as a minimum dimension of the discontinuity that can be detected by the image processing apparatus 3. A width of the section can be optionally set.

A distribution curve DC is calculated by performing regression analysis on the detection frequency for each length of the discontinuity. As an example, the calculation is performed by using curve regression (curve fitting). For example, the calculation is performed by fitting to a known distribution. The known distribution is, for example, a normal distribution, a Poisson distribution, a Bernoulli distribution, or the like. In addition, a mixed distribution of these distributions may be used. Since the method of calculating the distribution curve by using the curve regression is known, and the description thereof will be omitted. Fig. 8 is an example of a case in which the distribution curve DC is calculated by fitting to a normal distribution.

The recording control unit 10C records the testing data acquired by the testing data acquisition unit 10A and the data (distribution data) of the distribution of the severity of the discontinuity calculated based on the testing data, in the auxiliary storage device 14. The testing data is systematically organized and recorded in the auxiliary storage device 14. As a result, a database of the testing data is constructed. The distribution data is recorded in the auxiliary storage device 14 in association with the testing data as the calculation source.

The display control unit 10D controls the display on the display device 16. The display control unit 10D generates image data (display data) to be displayed on the display device based on the operation input from the input device 15, and outputs the generated display data to the display device 16. In the present embodiment, the display data is an example of second information.

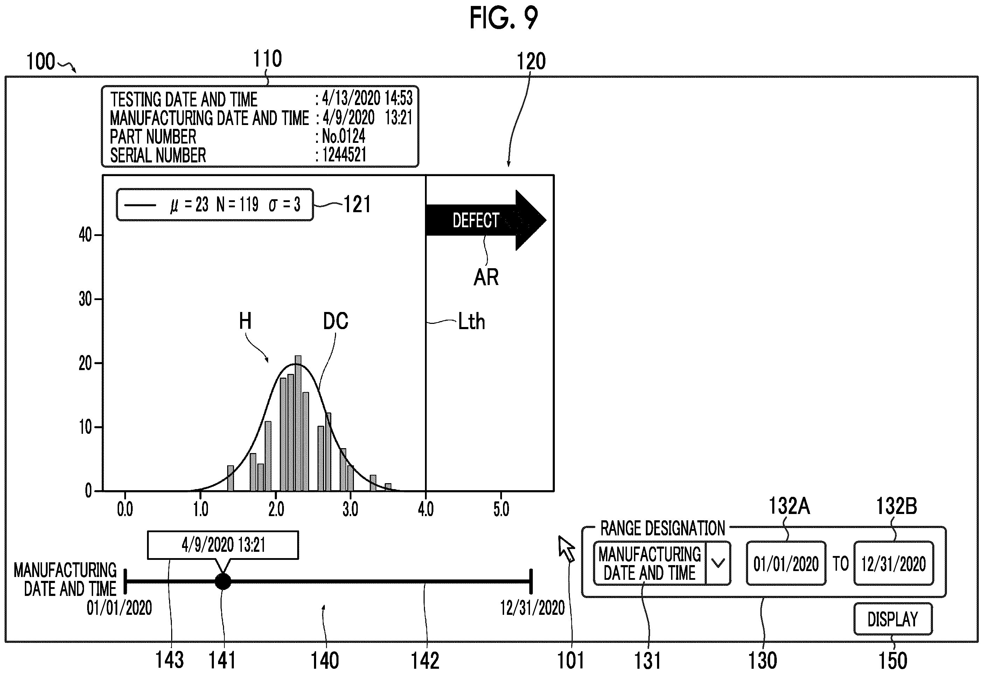

Fig. 9 is a diagram showing an example of the display data.

The display data 100 includes testing object information 110, a distribution graph 120, a range designation box 130, a time slider 140, a display button 145, and the like, and has a configuration in which each display information is arranged in a predetermined layout on a screen.

The testing object information 110 is information on the testing object. The testing object information 110 includes information, such as the part number, the serial number, the manufacturing date and time, and the testing date and time.

The distribution graph 120 is a graph showing the distribution of the severity of the discontinuity. In the present embodiment, the histogram H and the distribution curve DC showing the detection frequency for each length of the discontinuity are displayed. As shown in Fig. 9, the histogram H and the distribution curve DC are superimposed on each other and displayed in the same graph.

In addition, the information on the distribution curve DC is displayed in the graph. The information on the distribution curve DC is displayed in a box 121 set in the graph. In the example shown in Fig. 9, an average value µ, the number of samples N, and a standard deviation σ are displayed as the information on the distribution curve DC. The number of samples N is a total number of the detected discontinuities.

The reference value (threshold value) of the defect is further displayed in the distribution graph 120. Specifically, a straight line Lth is displayed at a position of the reference value of the defect, and the reference value of the defect is indicated on the graph. In this way, by displaying the reference value of the defect in a form that can be compared with the graph, an occurrence status and an occurrence tendency of the discontinuity can be easily understood.

In the present embodiment, further, an arrow AR indicating the range of the defect is displayed from the straight line Lth indicating the reference value of the defect, and the text "defect" is displayed within the arrow. As a result, a range of the discontinuity which is the defect can be made clear.

The range designation box 130 is a widget (component of a graphical user interface (GUI)) for designating a range of the testing object as the display target. An item selection portion 131 and range input portions 132A and 132B are displayed in the range designation box 130.

The item selection portion 131 is a portion for selecting an item for which the range is designated on the screen, and is configured by a drop-down list. In the present embodiment, two items of "manufacturing date and time" and "testing date and time" are displayed in a list in the drop-down list as the items for designating the range. Fig. 9 shows an example of a case in which the manufacturing date and time is selected. In the drop-down list, any one of the manufacturing date and time or the testing date and time is selected as a default.

The range input portions 132A and 132B are portions for inputting a date as a start point and a date of an end point of the range on the screen, and are both configured by a text box. The date as the start point of the range is input to the range input portion 132A on the left side in Fig. 9. In addition, the date as the end point of the range is input to the range input portion 132B on the right side in Fig. 9. Fig. 9 shows an example of a case in which the range is designated with "01/01/2020" as the start point and "12/31/2020" as the end point. In this case, 01/01/2020 to 12/31/2020 are set as a display range (range).

The time slider 140 is a widget for selecting the display target. The testing object as the display target is switched in time series by sliding a handle 141 along a track 142. The movement span of the handle 141 is set depending on the number of the testing objects. For example, in a case in which there are 100 testing objects as the display targets, the range is divided into 100 parts, and the movement span of the handle 141 is set. In the present embodiment, as shown in Fig. 9, the information on the manufacturing date and time of the selected testing object is displayed as a balloon 143 from the handle 141. The time slider 140 is an example of a slider.

The display control unit 10D reads out the testing data and the distribution data of the testing object designated by the time slider 140 from the auxiliary storage device 14, generates the display data 100, and outputs the display data 100 to the display device 16. The handle 141 is operated by, for example, a mouse. Specifically, a cursor 101 is moved onto the handle by operating the mouse, and the mouse is slid left and right in a clicked state. In addition, a configuration can also be adopted in which the handle is slid by the rotation of a wheel provided in the mouse.

It should be noted that, as an initial state, the display control unit 10D displays the oldest display data of the testing object within the designated range. Therefore, the handle 141 of the time slider 140 is located at the left end of the track 142.

The display button 145 is a button for giving an instruction to execute the display. In a case in which the display button 145 is clicked, the display is started under the condition of the designated range.

### [Actions of information processing apparatus]

The actions of the information processing apparatus 10 configured as described above are as follows.

### [Acquisition of testing data]

First, the information processing apparatus 10 acquires the testing data of the testing object (corresponding to a step of acquiring first information). Here, as the testing data, the testing data of a plurality of testing objects manufactured in time series is acquired.

The information processing apparatus 10 generates the distribution data individually from the acquired testing data (corresponding to a step of calculating a distribution of the severity of the discontinuity). Then, the generated distribution data is recorded in the auxiliary storage device 14 together with the testing data. The distribution data is recorded in the auxiliary storage device 14 in association with the testing data. As a result, the database of the testing data is constructed.

It should be noted that the testing data as described above includes the information on the reference value (threshold value) of the defect. Therefore, the testing data is acquired, whereby the information on the reference value of the defect is also acquired (corresponding to a step of acquiring information on a threshold value).

### [Display of distribution data]

The information processing apparatus 10 displays the distribution data generated from the acquired testing data on the display device 16 based on the operation input from the user.

First, the information processing apparatus 10 receives the designation of the display range. The user selects the item (manufacturing date and time or testing date and time) for designating the range in the range designation box 130 displayed on the screen of the display device 16. In addition, the range of the date and time as the display target is input.

It should be noted that, in a case in which the range is not designated, all pieces of the data of the testing object recorded in the database are set as the display target. In addition, only the start point or only the end point can be designated for the range of the date and time. In a case in which only the start point is designated, all pieces of the data after the designated date and time are set as the display targets. On the other hand, in a case in which only the end point is designated, all pieces of the data before the designated date and time are set as the display targets.

In a case in which the display button 145 issues the instruction to execute the display, the information processing apparatus 10 starts the processing of the display under the designated condition.

First, the oldest testing data and distribution data of the testing object within the range of the designated date are read out, and the display data is generated (corresponding to a step of generating second information). Then, the generated display data is displayed on the screen of the display device 16 (corresponding to a step of displaying the second information). Thereafter, the display data of the designated testing object is generated in response to the operation of the time slider 140, and the generated display data is displayed on the screen. The distribution graph 120 included in the display data is switched in order to a new manufacturing date and time by sliding the handle 141 of the time slider 140 to the right in Fig. 9. That is, the display is switched in the manufacturing date-and-time order in time series.

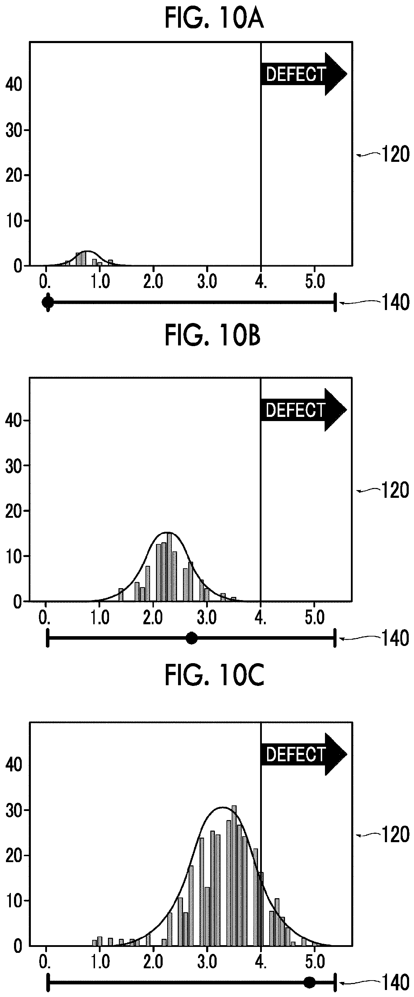

Figs. 10A to 10C are diagrams showing an example of the change in the distribution graph. Figs. 10A to 10C show examples of a case in which the number and the size of the discontinuities occurring in the testing object increase over time. Fig. 10A shows a distribution graph at the start of the display. In this case, the distribution graph of the testing object having the oldest manufacturing date and time within the designated range is displayed. Fig. 10B shows a case in which the display target is switched to the display target having a more recent manufacturing date and time by moving the time slider 140. Fig. 10C shows a case in which the time slider 140 is further moved.

As shown in Figs. 10A to 10C, the display target is switched in time series by moving the time slider 140. As a result, it is possible to easily understand the change in the distribution of the severity of the discontinuity (in the present embodiment, the distribution of the length of the discontinuity) in time series. In addition, since the distribution graph 120 includes the information (straight line Lth and arrow AR) on the reference value (threshold value) of the defect, which is the acceptance/unacceptance determination criterion, the state of the change can be understood while comparing a relationship with the reference value of the defect.

As described above, with the information processing apparatus 10 according to the present embodiment, the state of the change in the time series can be observed while comparing the distribution of the severity of the discontinuity with the acceptance/unacceptance determination reference value (the reference value of the defect). As a result, the state of the manufactured component can be accurately understood, and the improvement in the manufacturing process, the design process, and the like can be achieved.

### [Modification example]

### [Designation of display target]

In the above-described embodiment, the configuration has been adopted in which the display target and the display range are designated by using the manufacturing date and time or the testing date and time of the testing object, but the method of designating the display target and the display range is not limited to this. For example, in a case in which the testing data includes the serial number, a configuration can also be adopted in which the display target and the display range are designated by using the serial number. In addition, the display target and the display range can be designated by using identification information assigned in the manufacturing order or the testing order of the testing object. That is, the display target and the display range can be designated by using the time-series information of the testing object. In a case in which the display target and the display range are designated by using the number such as the serial number, the display target is switched in the number order in response to the operation of the time slider 140.

### [Automatic play of distribution data]

In the above-described embodiment, the configuration has been adopted in which the display target is manually switched by operating the time slider 140, but a configuration can also be adopted in which the display target is automatically switched. That is, a so-called automatic play function may be provided.

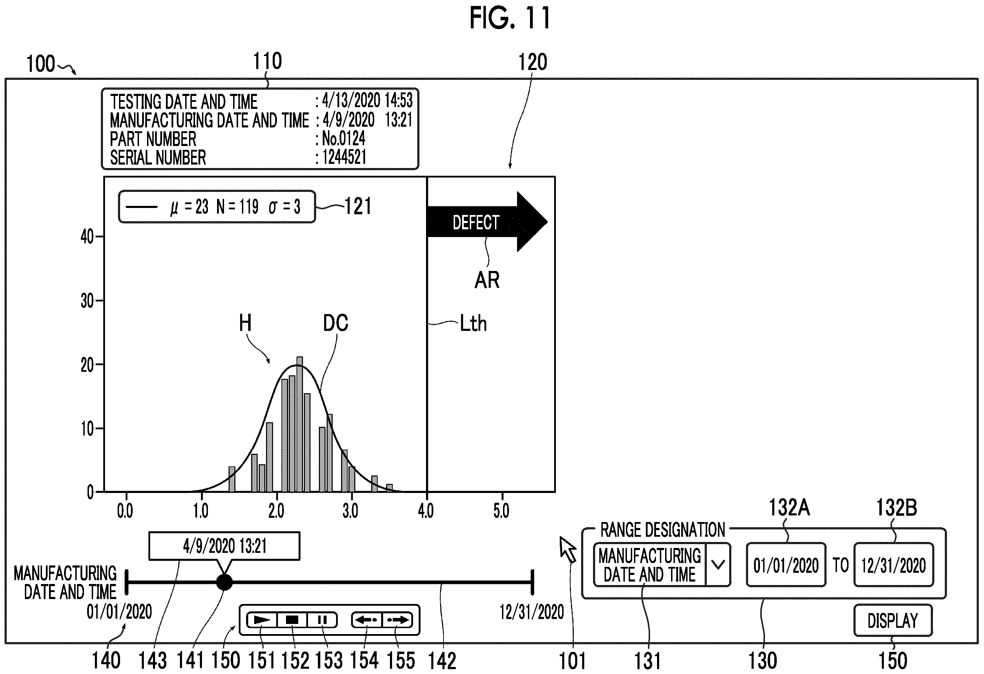

Fig. 11 is a diagram showing an example of the display data in a case in which the automatic play function is provided.

As shown in Fig. 11, in a case in which the automatic play function is provided, the controller box 150 for play is further displayed.

The controller box 150 for play includes a play button 151, a stop button 152, a pause button 153, a previous button 154, and a next button 155. The play button 151 is a button for issuing an instruction to start the automatic play. The stop button 152 is a button for issuing an instruction to end the automatic play. The pause button 153 is a button for issuing an instruction of a pause of the automatic play. The previous button 154 is a button for issuing an instruction to play the display data of the previous testing object. The next button 155 is a button for issuing an instruction to display the display data of the next testing object.

In a case in which the play button 151 is pressed (clicked) by the user, the automatic play is started from the stopped position. That is, the display target is switched in time series. The time slider 140 is also moved in conjunction with the switching of the display target. More specifically, the handle 141 of the time slider 140 is moved.

The play is performed at a constant speed. That is, the display data is displayed for a certain time and then switched to the display data of the next testing object. It is preferable that the play speed can be optionally set by the user.

In a case in which the stop button 152 is pressed during the play, the play ends. In a case in which the play ends, the oldest display data (oldest display data of the testing object within the designated range) is displayed on the screen.

In addition, in a case in which the pause button 153 is pressed during the play, the play pauses. In a case in which the previous button 154 is pressed during the pause, the display data of the previous testing object is displayed on the screen. In addition, in a case in which the next button 155 is pressed, the display data of the next testing object is displayed on the screen.

### [Display for each type of discontinuity]

In the above-described embodiment, the type of the discontinuity is also determined in a case of detecting the discontinuity from the image. In this way, in a case of determination the type of the discontinuity, it is more preferable that the distribution for each type can be generated to display the distribution.

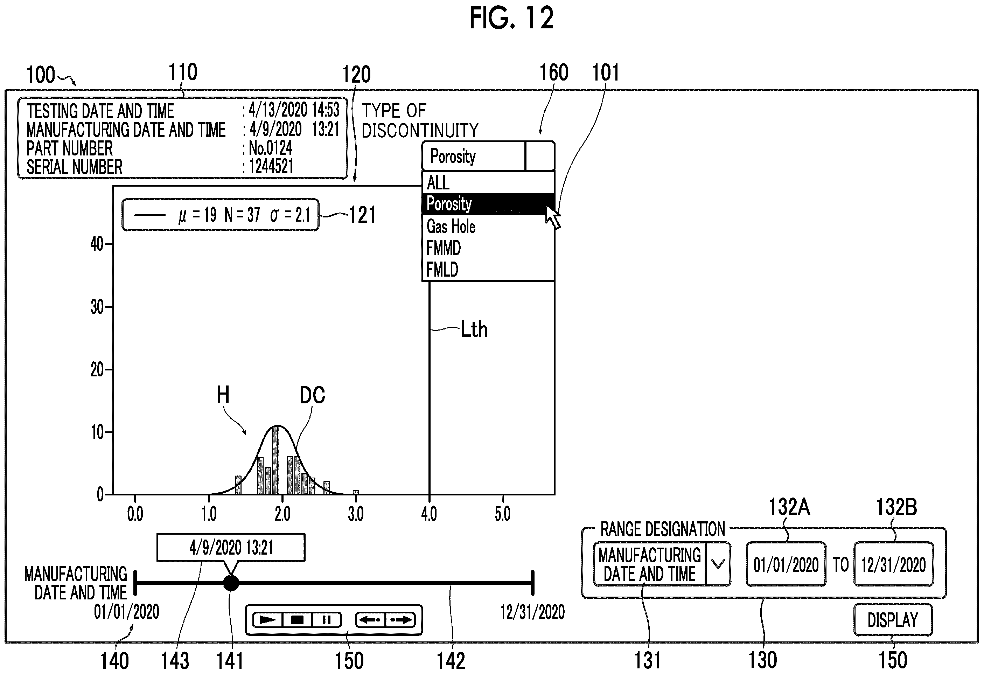

Fig. 12 is a diagram showing an example of the display data in a case in which a function of displaying the distribution data for each type of the discontinuity is provided.

As shown in Fig. 12, in a case in which the distribution data is displayed for each type of the discontinuity, a type selection portion 160 is further displayed. The type selection portion 160 is a portion for selecting the type of the discontinuity of which the distribution data is displayed, and is configured by a drop-down list. The selectable types of the discontinuity are displayed in a list in the drop-down list. Fig. 12 shows an example of a case in which the selectable types of the discontinuity are "porosity", "gas hole", "FMMD", "FMLD", and "ALL". The "ALL" is a selection item in a case of collectively displaying all the types of the discontinuities. Fig. 12 shows an example in a case in which the "porosity" is selected.

In this way, it is possible to display the distribution for each type of the discontinuity, and thus it is possible to analyze the occurrence status, the occurrence tendency, and the like for each type of the discontinuity. As a result, the state of the manufactured component can be more accurately understood.

It should be noted that, in the above-describe example, the configuration has been adopted in which only one type of discontinuity is selected, but a configuration may be adopted in which a plurality of types of the discontinuities can be selected. In this case, the distributions of the selected types of the discontinuities can be color-coded and/or line-coded, and can be simultaneously displayed in one graph. It should be noted that, in a case in which the distributions of the plurality of types of the discontinuities are simultaneously displayed as described above, it is preferable to display only the distribution curve.

### [Display of testing image]

In a case in which the testing data acquired by the information processing apparatus 10 includes the testing image, the testing image may be included in the display data.

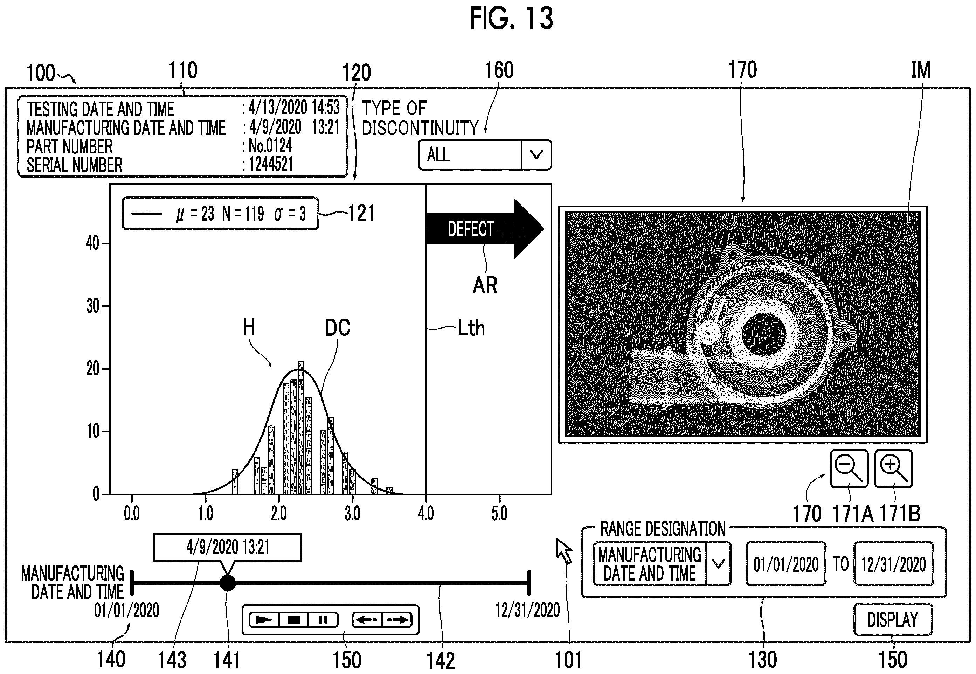

Fig. 13 is a diagram showing an example of the display data in a case in which the testing image is displayed.

As shown in Fig. 13, the screen includes a testing image display portion 170, and the testing image IM of the testing object being displayed in the testing image display portion 170 is displayed.

It should be noted that it is more preferable that a zoom function is provided in a case of displaying the testing image IM. For example, as shown in the example of Fig. 13, a configuration can be adopted in which a zoom button 171 is displayed adjacent to the testing image display portion 170 and the zoom operation is received. In Fig. 13, the zoom button 171 includes a zoom-in button 171A and a zoom-out button 171B, an instruction to enlarge the image is issued by using the zoom-in button 171A, and an instruction to reduce the image is issued by using the zoom-out button 171B. More specifically, the image is enlarged at a predetermined magnification each time the zoom-in button 171Ais pressed. In addition, the image is reduced at a predetermined magnification each time the zoom-out button 171B is pressed. The image is enlarged and reduced with a designated position (for example, a clicked position) as the center. In addition, the display position of the enlarged image is changed, for example, by a drag operation. In addition, a configuration can also be adopted in which the zoom operation is performed by, for example, the wheel operation of the mouse or the like.

In a case in which the data of the segmentation mask is further included, the data of the segmentation mask may be superimposed on the testing image IM and displayed. In addition, the display of the data of the segmentation mask may be optionally turned on and off.

By displaying the data of the segmentation mask, it is easy to understand the occurrence position of the discontinuity on the testing image IM.

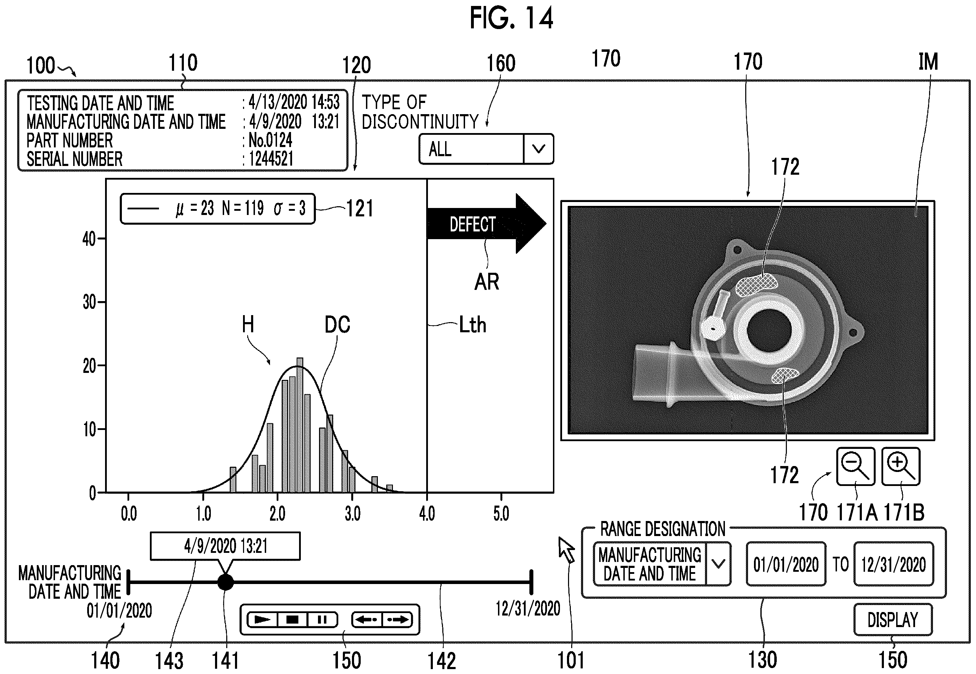

Fig. 14 is a diagram showing another example of the display data in a case in which the testing image is displayed.

Fig. 14 shows an example of a case in which the individual discontinuities are aggregated and an occurrence area 172 of the discontinuity is displayed on the testing image IM.

A known method can be adopted for the calculation and the display of the occurrence area of the discontinuity. For example, a method of displaying the frequency with the density (continuous display), a method of displaying a boundary of the occurrence area (discrete display), or the like can be adopted.

As the method of displaying the frequency with the density, for example, for an image (for example, the data of the segmentation mask) as the detection result of the discontinuity, a method of dividing the image into a plurality of sections, and converting the frequency of each section into the density can be adopted. In addition, a method of convolving a filter such as a Gaussian filter in units of pixels can be adopted.

As the method of displaying the boundary of the occurrence area, for example, a method of grouping the regions of the discontinuities together by the expansion processing or the like can be adopted. Further, a method of surrounding the group including the discontinuities within a defined distance with a polygon, a method of surrounding the group with a convex hull using a Quick hull method or the like for the sake of visibility, and a method of obtaining a boundary line using a level set method can be adopted.

It is preferable that the occurrence area 172 of the discontinuity is displayed on the testing image IM in an aspect that can be easily identified. For example, it is preferable to perform the display with the color.

In addition, it is more preferable that the occurrence area can be displayed for each type in a case in which the discontinuity is detected for each type.

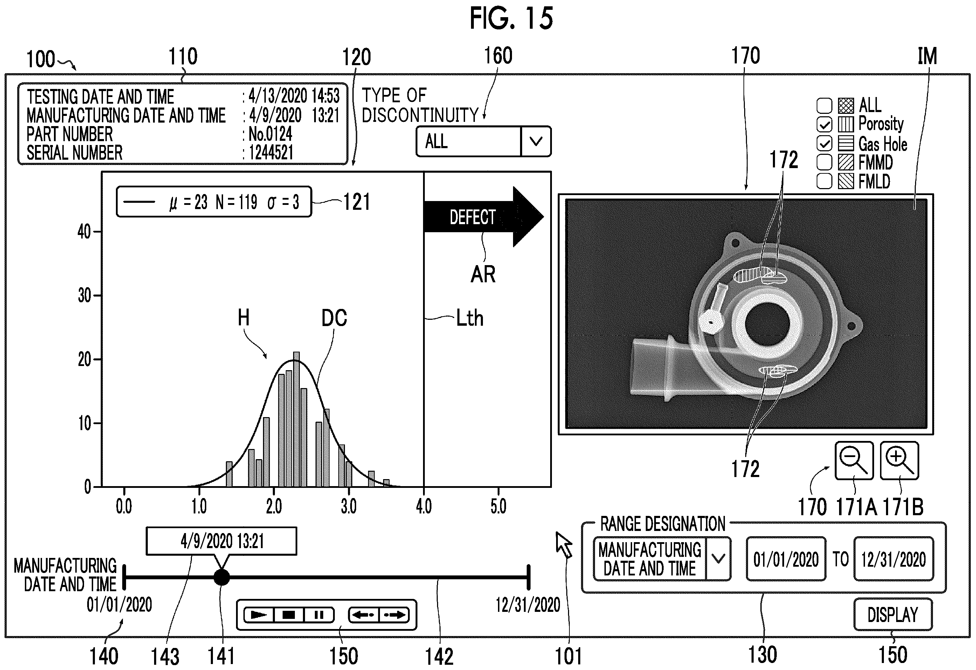

Fig. 15 is a diagram showing an example of the display data in a case in which a function of displaying the occurrence area is provided for each type of the discontinuity.

As shown in Fig. 15, in a case in which the occurrence area 172 is displayed for each type of the discontinuity, a type selection portion 173 is further displayed. The type selection portion 173 is a portion for selecting the type of the discontinuity of which the occurrence area 172 is displayed, and is configured by a check box. The selectable types of the discontinuity are displayed in a list in the check box. Fig. 15 shows an example of a case in which the selectable types of the discontinuity are "porosity", "gas hole", "FMMD", and "FMLD". In the example shown in Fig. 15, "ALL" is further displayed as a selectable item. The "ALL" is an item selected in a case in which the occurrence areas of all the types of the discontinuities are collectively displayed. The "ALL" is selected alone. Therefore, in a case in which the "ALL" is selected, other items cannot be selected. The items other than the "ALL" can be redundantly selected.

The user puts a check mark in a square of the type of the discontinuity for which the display is desired. Specifically, the square of the type of the discontinuity for which the display is desired is clicked, and the check mark is put. Fig. 15 shows an example in a case in which the "porosity" and the "gas hole" are selected.

In a case of the present example, the display aspect of the occurrence area is shown in a different manner for each type. For example, the occurrence area is displayed by changing the color, the line type, the pattern, and the like. As a result, the occurrence area can be understood for each type of the discontinuity.

As described above, by enabling the display of the occurrence area for each type of the discontinuity, it is possible to analyze the occurrence status, the occurrence tendency, and the like for each type of the discontinuity. As a result, the state of the manufactured component can be more accurately understood.

It should be noted that, in the above-described example, the configuration has been adopted in which the type of the discontinuity is selected in the type selection portion 173, but a configuration can also be adopted in which the type is selected in the type selection portion 160. In this case, the type of the discontinuity displayed on the distribution graph 120 matches the type of the discontinuity of which the occurrence area is displayed on the testing image.

### [Display of distribution]

In the above-described embodiment, the configuration has been adopted in which two of the histogram H and the distribution curve DC are displayed as the distribution of the severity of the discontinuity, but a configuration can be adopted in which only one of the histogram H or the distribution curve DC is displayed.

In a case in which only one of the histogram H or the distribution curve DC is displayed, it is preferable to display the distribution curve DC. This is because the understanding of the occurrence distribution can be obtained at a glance by displaying the distribution curve DC. This is because the state of the change can be easily understood by the time-series switching display.

It should be noted that the user may optionally select the distribution to be displayed.

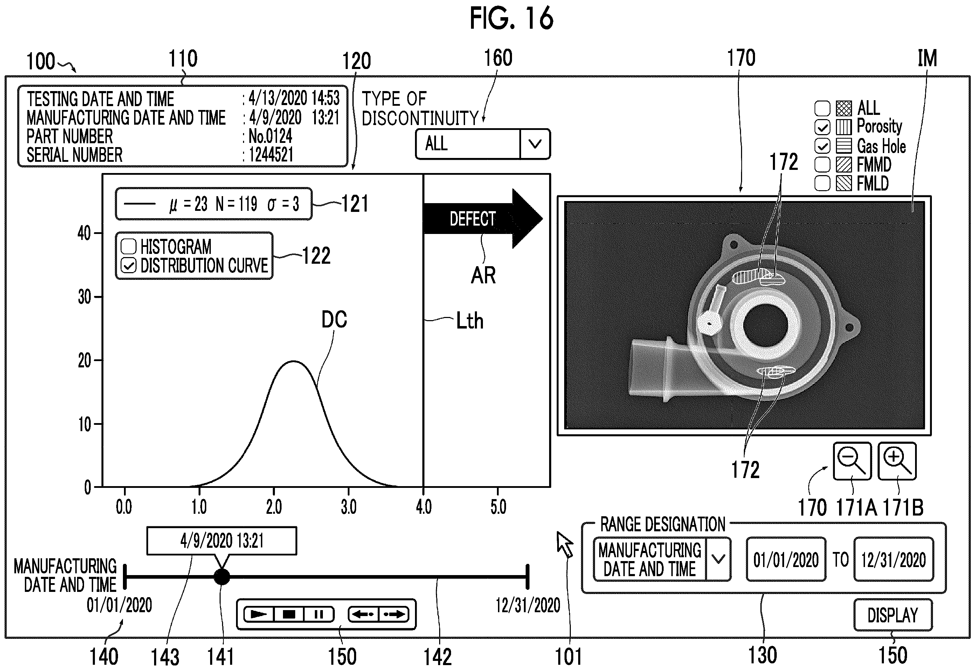

Fig. 16 is a diagram showing an example of display data in a case in which a function of selecting the distribution to be displayed is provided.

As shown in Fig. 16, a distribution selection portion 122 is further displayed. The distribution selection portion 122 is a portion for selecting the type of the distribution to be displayed, and is configured by a check box. The selectable types of the distribution are displayed in a list in the check box. Fig. 16 shows an example of a case in which the selectable types of the distribution are "histogram" and "distribution curve".

The user puts a check mark in a square in front of the distribution for the type for which the display is desired. Fig. 16 shows an example of a case in which the "distribution curve" is selected. In this case, only the distribution curve DC is displayed.

In this way, by adopting the configuration in which the distribution to be displayed can be optionally selected, it is possible to provide the display that is easy to analyze or the like.

### [Case in which distribution has multimodality]

In a case in which the calculated distribution of the severity of the discontinuity has multimodality (in a case in which the distribution has a plurality of peaks), a configuration can also be adopted in which the distribution of the peak closest to the reference value (threshold value) of the defect is calculated and displayed.

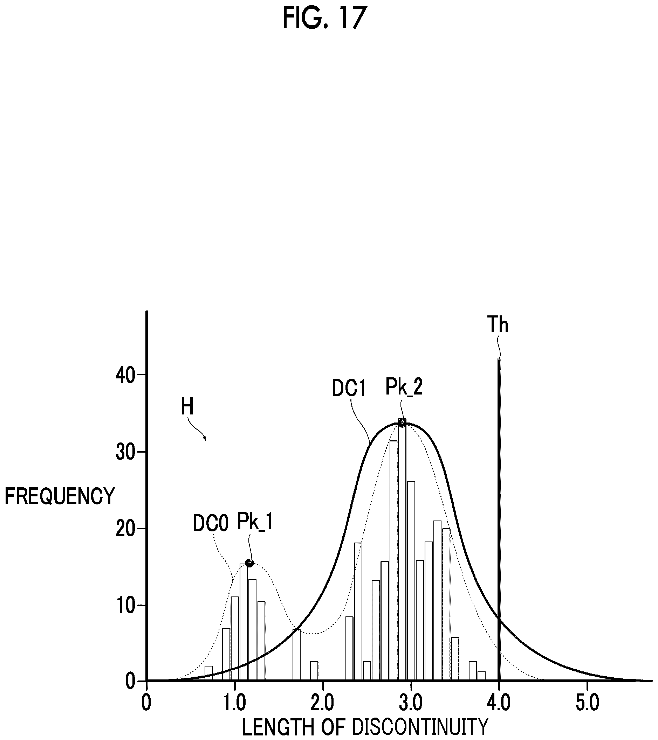

Fig. 17 is a conceptual diagram of processing of calculating the distribution curve of a partial data closest to the reference value of the defect. Fig. 17 shows an example of a case in which the distribution has bimodality.

A distribution curve DC1 of the partial data closest to the reference value of the defect is calculated, for example, by the following procedure.

### [Step 1]

First, a distribution curve DC0 of the severity of the discontinuity is calculated.

As described above, the distribution curve DC0 is calculated by fitting to the known distribution. It should be noted that the calculation may be performed by using a histogram as the frequency for each section of the severity, a kernel density estimation method, or the like.

### [Step 2]

Next, the extreme value close to the reference value of the defect and the range of the extreme value are calculated.

The extreme value Pk_n (n = 1, 2, ...) is obtained from the change amount of the distribution. In a case in which there are a plurality of the extreme values Pk_n, the extreme value Pk_n closest to the reference value Th of the defect is selected. In this case, the distribution may be smoothed for noise removal. In a case of the example shown in Fig. 17, the extreme value PK_2 on the right side in Fig. 17 is selected.

In a case of the mixed distribution, only the distribution in which the parameter corresponding to the extreme value is closest to the reference value Th of the defect may be extracted.

As the range, the distribution may be recalculated, such as fitting a known distribution around the selected extreme value.

It should be noted that the above-described calculation method is an example, and the calculation can also be performed by using other known methods.

The most important thing in understanding the state of the manufactured component is a change in the distribution in the region closest to the reference value of the defect. Therefore, as in the present example, by calculating the distribution curve of the partial data closest to the reference value of the defect and displaying only the distribution curve, the state of the manufactured component can be presented in a more easily understandable manner.

It should be noted that, as the display method of the distribution curve, the user may be able to optionally select the display form of the present example and a normal display form.

### [Other examples of severity of discontinuity]

Examples of the severity of the discontinuity include an "area of the discontinuity", a "degree of distortion of the discontinuity", a "sharpness of the shape of the discontinuity", and a "density of the discontinuity", in addition to the length of the discontinuity described in the above-described embodiment.

Here, the "area of the discontinuity" is obtained, for example, by calculating the area of the region detected as the discontinuity.

The "degree of distortion of the discontinuity" is calculated, for example, by using a ratio between the major axis and the minor axis of the discontinuity or a ratio of the long side to the short side of the discontinuity. The major axis and the minor axis of the discontinuity are acquired by obtaining the ellipse circumscribing the discontinuity, and measuring the major axis and the minor axis (see Fig. 3B). The long side and the short side of the discontinuity are acquired by obtaining the rectangle circumscribing the discontinuity, and measuring the long side (so-called maximum Feret's diameter) and the short side (so-called minimum Feret's diameter) (see Fig. 3C).

The "sharpness of the shape of the discontinuity" means the sharpness represented by an aspect ratio or the like. The "sharpness of the shape of the discontinuity" is calculated, for example, by using a ratio between the major axis and the minor axis of the discontinuity or a ratio of the long side to the short side of the discontinuity. It should be noted that, in a case in which the "sharpness of the shape of the discontinuity" is calculated in this way, the same calculation method as the calculation method of the "degree of distortion of the discontinuity" may be used. In this case, the severity is calculated as including both the "degree of distortion of the discontinuity" and the "sharpness of the shape of the discontinuity".

The "density of the discontinuity" is calculated, for example, by using the density of the discontinuities in a specific testing visual field. In addition, an average value of the distances between the discontinuities, or a minimum value or a maximum value of the distances between the discontinuities can also be calculated as the "density of the discontinuity". The distance between the discontinuities may be obtained, for example, from a distance between the centers or a distance between the outer peripheries.

In addition, the number of discontinuities per unit area, an occupancy rate of the discontinuity, and the like can be used as the severity of the discontinuity.

In a case in which the information on a plurality of types of the severity is acquired, the information processing apparatus 10 can calculate the distribution for each type of the severity of the discontinuity, and display the graph of the distribution. In this case, the designation of the type to be displayed is received, and the distribution graph of the received type of the severity is displayed. It should be noted that, in general, the acceptance/unacceptance determination criterion (reference value of the defect) is different for each type of the severity. Therefore, in a case in which the distribution graph is displayed corresponding to the plurality of types of the severity, the information on the acceptance/unacceptance determination criterion (information on the threshold value) is acquired for each type of the severity.

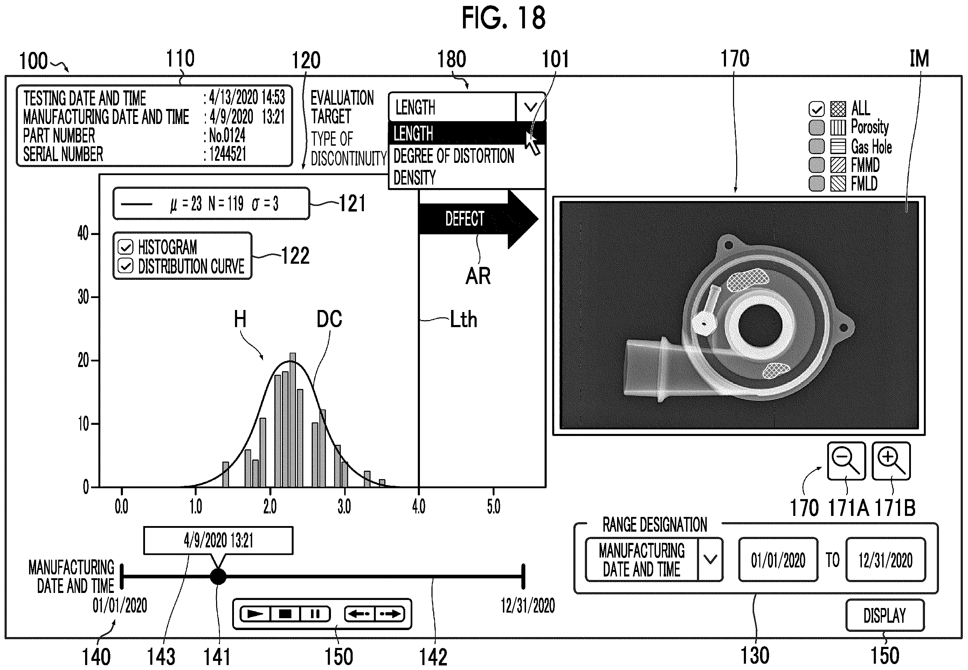

Fig. 18 is a diagram showing an example of the display data in a case in which a function of displaying the distribution data for each type of the severity of the discontinuity is provided.

As shown in Fig. 18, in a case in which the distribution data is displayed for each type of the severity of the discontinuity, an evaluation target selection portion 180 is further displayed. The evaluation target selection portion 180 is a portion for selecting the type of the severity of the discontinuity as the evaluation target, and is configured by a drop-down list. The selectable types of the severity of the discontinuity are displayed in a list in the drop-down list. Fig. 18 shows an example of a case in which the selectable types of the severity of the discontinuity are "length", "degree of prejudice", and "density". Fig. 18 shows an example of a case in which the "length" is selected.

As described above, by enabling the display of the distribution for each type of the severity of the discontinuity, it is possible to analyze the occurrence status, the occurrence tendency, and the like for each type of the severity of the discontinuity. As a result, the state of the manufactured component can be more accurately understood.

It should be noted that, in Fig. 18, only the distribution graph of the severity of one type is displayed, but a configuration may be adopted in which the distribution graphs of a plurality of types of the severity are simultaneously displayed. In this case, for example, the distribution graphs of the plurality of types of the severity and the information on the reference value of the defect can be color-coded and/or line-coded and displayed in a single graph.

### [Comparative observation]

The distribution data of two testing objects may be displayed on the distribution graph 120 so that two pieces of the distribution data can be compared.

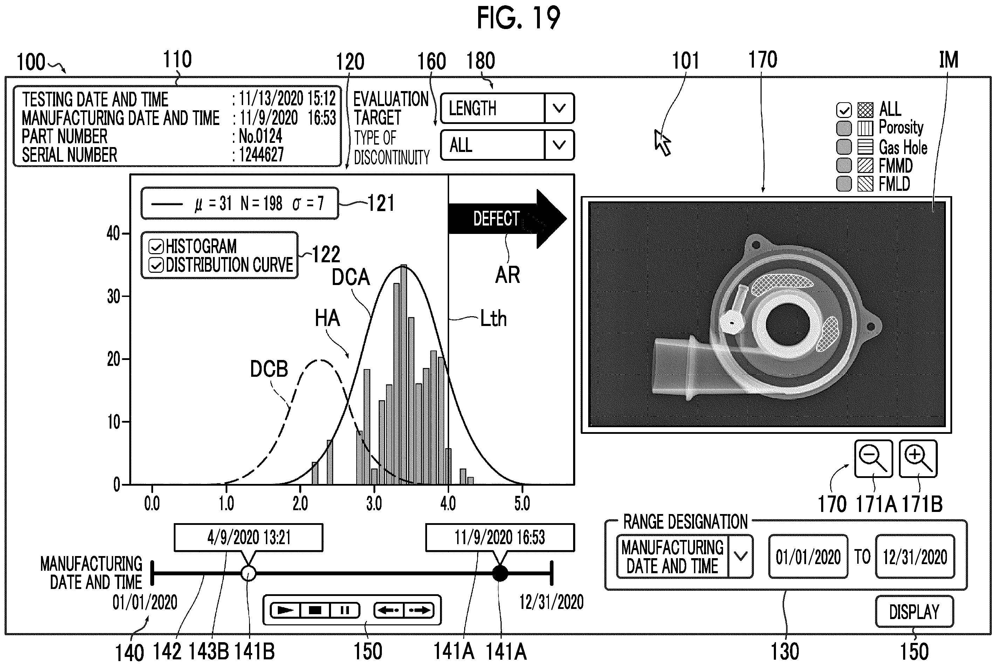

Fig. 19 is a diagram showing an example of the display data in a case in which a comparative observation function is provided.

Fig. 19 shows an example of a case in which two display targets are designated by the time slider 140. As shown in Fig. 19, in this case, the time slider 140 comprises two handles (first handle 141Aand second handle 141B).

The first handle 141A is a handle for selecting a first testing object. The first testing object is a main testing object. The first testing object as the display target is switched in time series by sliding the first handle 141A along the track 142. In addition, information on the manufacturing date and time of the selected testing object is displayed as a balloon 143A from the first handle 141A.

The second handle 141B is a handle for selecting a second testing object. The second testing object is a testing object as a comparison target with the main testing object. The second testing object as the display target is switched in time series in a case in which the second handle 141B is slid along the track 142. In addition, the information on the manufacturing date and time of the selected testing object is displayed as a balloon 143B from the second handle 141B.

The distribution data of the two designated testing objects is displayed on the distribution graph 120. Here, for the first testing object, the graph of the distribution selected in the distribution selection portion 122 is displayed. Fig. 19 shows an example of a case in which both the histogram and the distribution curve are selected in the distribution selection portion 122. In this case, both a histogram HA and a distribution curve DCA are displayed for the first testing object. On the other hand, only a distribution curve DCB is displayed for the second testing object as the comparison target. The distribution curve DCB of the second testing object is displayed in a distinguishable aspect from the distribution curve DCA of the first testing object. In the example shown in Fig. 19, the distribution curve DCA of the first testing object is displayed by a solid line, and the distribution curve DCB of the second testing object is displayed by a broken line. In addition, the two distribution curves can be displayed in a distinguishable aspect by displaying the two distribution curve in different colors.

The testing image IM of the first testing object is displayed. In addition, in a case of the automatic play, the first testing object is automatically switched.

It should be noted that, in the present example, the configuration has been adopted in which only one comparison target can be selected, but a configuration may be adopted in which a plurality of comparison targets can be selected.

In this way, by configuring such that the specific testing object can be comparatively observed, the analysis of the occurrence status, the occurrence tendency, and the like of the discontinuity can be facilitated.

### [Second embodiment]

By acquiring the testing data in time series, it is possible to predict the distribution of the severity of the discontinuity in the future. Therefore, in the present embodiment, an information processing apparatus having a function of predicting the distribution of the severity of the discontinuity in the future will be described.

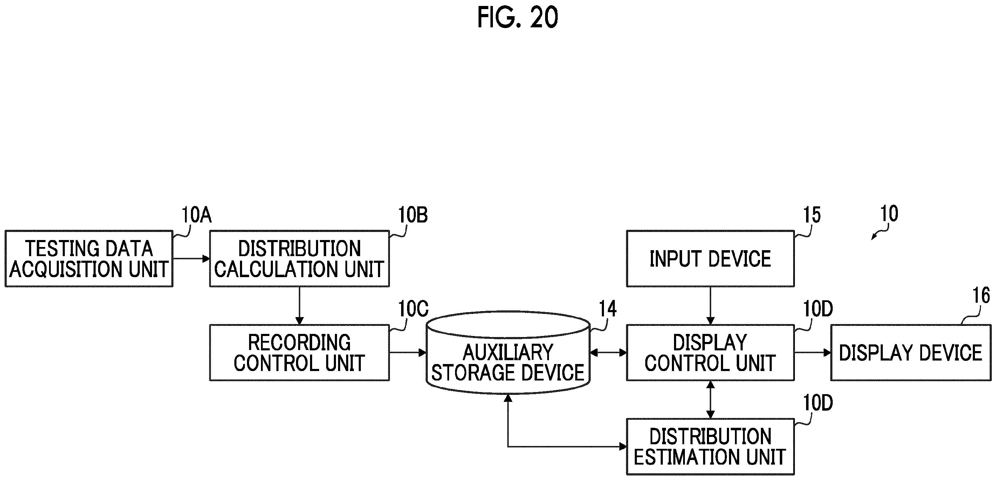

Fig. 20 is a block diagram of main functions of the information processing apparatus.

As shown in Fig. 20, the information processing apparatus 10 according to the present embodiment further has a function of a distribution estimation unit 10E. This function is realized by the CPU 11 executing a predetermined program (information processing program).

It should be noted that, since the configuration is substantially the same as the configuration of the above-described embodiment except for the point that the distribution estimation unit 10E is provided, the matter related to the distribution estimation unit 10E will be described here.

The distribution estimation unit 10E estimates the distribution curve of the severity of the discontinuity at a specific point in time in the future based on the testing data stored in the auxiliary storage device 14. In the present embodiment, the user designates the specific point in time in the future. The designation is performed on the screen.

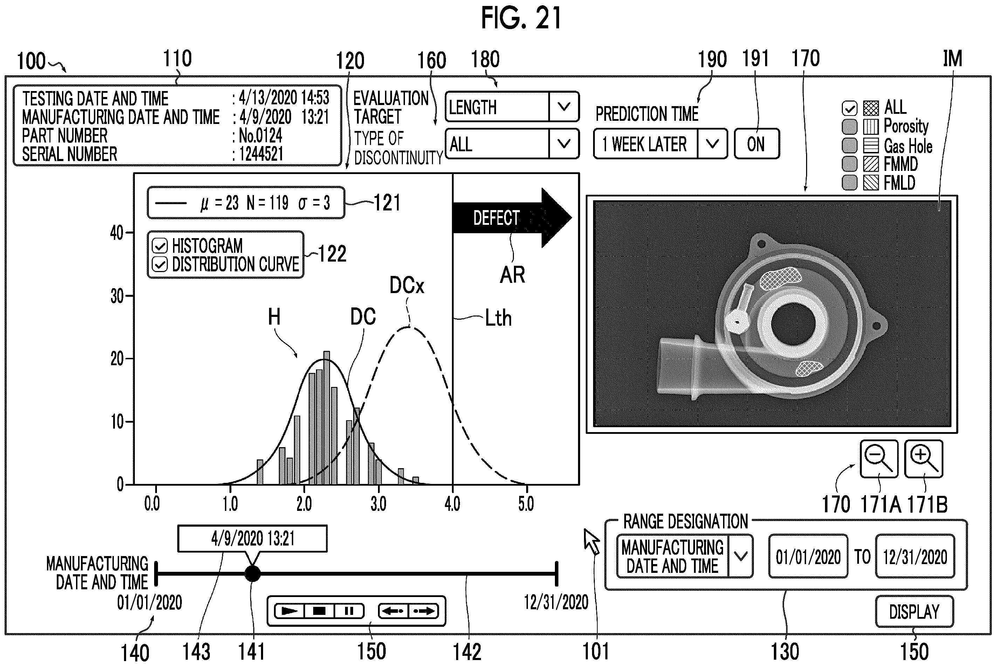

Fig. 21 is a diagram showing an example of the display data.

As shown in Fig. 21, the display data 100 to be displayed on the screen includes a prediction time selection portion 190 and a prediction button 191. The prediction time selection portion 190 is a portion for selecting a prediction time. In the present embodiment, the prediction time selection portion 190 is configured by a drop-down list. The selection candidates of the prediction time are displayed in a list in the drop-down list. Here, in the present embodiment, it is assumed that it is possible to make a prediction for 1 week later, 1 month later, 3 months later, and 6 months later based on the current date and time. Therefore, "1 week later", "1 month later", "3 months later", and "6 months later" as the selection candidates are displayed in a list in the drop-down list. The user selects one from the selection candidates displayed in the drop-down list.

The prediction button 191 is a button for issuing an instruction to turn on and off the prediction. In a case in which the prediction is turned on, the prediction processing is performed, and the result thereof is displayed on the distribution graph 120. In a case in which the prediction is turned off, the display of the result is turned off.

As described above, the prediction processing is performed based on the testing data stored in the auxiliary storage device 14. That is, the distribution curve in the future is predicted based on the past data. As the prediction processing, various methods including known methods can be adopted. For example, a method of calculating the center of the distribution for each certain interval and calculating the center of the distribution in the future for the designated time from the movement amount thereof can be adopted. As the movement amount, a model suitable for the analysis target need only be assumed, such as acceleration and deceleration, in addition to the constant speed. In addition, a configuration can be adopted in which future prediction processing is performed by using a trained model.

The prediction button 191 is pressed, the prediction is turned on, and the distribution curve in the future is calculated only for the designated time and is displayed on the distribution graph 120. As shown in Fig. 21, a distribution curve DCx in the future is displayed in a distinguishable aspect from the distribution curve DC being displayed. For example, the display is performed in a color and/or a line type different from the distribution curve DC being displayed.

In this way, the distribution in the future can be predicted and presented, which can contribute to the improvement in the manufacturing process, the design process, and the like.

It should be noted that, in the above-described embodiment, the configuration has been adopted in which only one prediction point in time can be selected, but a configuration may be adopted in which a plurality of points in time can be selected. In this case, the distribution curves at the selected plurality of points in time are predicted, and the prediction results are simultaneously displayed in an identifiable aspect.

### [Other embodiments]

### [Regarding combination]

The configurations described in the embodiments and the configurations of the modification examples thereof can be used in combination as appropriate.

### [Regarding image]

In the above-described embodiment, the example has been described in which the image (X-ray transmission image) obtained by imaging the testing object via the X-ray imaging system is acquired as the testing image and is processed, but the image to be processed is not limited to this. The present invention can also be applied to an image (radiation transmission image) captured using radiation other than X-rays. In addition, the present invention can be applied to an image other than the radiation transmission image. For example, the present invention can also be applied to a visible light image, an ultrasound image (particularly, an ultrasound image used in non-destructive testing), and the like.

### [Regarding program for operating computer]

It is possible to record a program causing a computer to realize some or all of the processing functions of the information processing apparatus 10, on an optical disk, a magnetic disk, or a computer-readable medium such as a semiconductor memory or other tangible non-transitory information storage medium, and to provide the program through this information storage medium.

Instead of storing the program in such a non-transitory computer-readable medium and providing the program, it is also possible to provide a program signal as a download service by using an electric communication line such as the Internet.

Some or all of the processing functions in the information processing apparatus 10 may be realized by cloud computing, or can be provided as service of software as a service (SasS).

### [Hardware configuration of processing unit]

In the information processing apparatus 10, the hardware configuration of the processing unit that performs various types of processing is realized by various processors. The various processors include a CPU which is a general-purpose processor that executes program and functions as the various processing units, a graphics processing unit (GPU) which is a processor specialized for image processing, a programmable logic device (PLD) which is a processor of which a circuit configuration can be changed after manufacture, such as a field programmable gate array (FPGA), and a dedicated electric circuit which is a processor having a circuit configuration that is designed for exclusive use in order to execute specific processing, such as an application specific integrated circuit (ASIC).

One processing unit may be configured by one of these various processors or may be configured by two or more processors of the same type or different types. For example, one processing unit may be configured by a plurality of FPGAs, a combination of a CPU and an FPGA, or a combination of a CPU and a GPU. Moreover, a plurality of processing units may be configured by one processor. As an example in which the plurality of processing units are configured by one processor, first, there is a form in which one processor is configured by a combination of one or more CPUs and software, and this processor functions as the plurality of processing units, as represented by a computer, such as a client or a server. Second, there is a form in which a processor, which realizes the functions of the entire system including the plurality of processing units with one integrated circuit (IC) chip, is used, as represented by a system on a chip (SoC) or the like. As described above, various processing units are configured by one or more of the various processors described above, as the hardware structure.

Further, the hardware structure of these various processors is, more specifically, an electric circuit (circuitry) in which circuit elements, such as semiconductor elements, are combined.

### Explanation of References

1: X-ray testing system
2: X-ray imaging system
3: image processing apparatus
10: information processing apparatus
10A: testing data acquisition unit
10B: distribution calculation unit
10C: recording control unit
10D: display control unit
10E: distribution estimation unit
11: CPU
12: RAM
13: ROM
14: auxiliary storage device
15: input device
16: display device
17: input/output interface
100: display data
101: cursor
110: testing object information
120: distribution graph
121: box
122: distribution selection portion
130: range designation box
131: item selection portion
132A: range input portion
132B: range input portion
140: time slider
141: handle
141 A: first handle
141B: second handle
142: track
143: balloon
143A: balloon
143B: balloon
145: display button
150: controller box
151: play button
152: stop button
153: pause button
154: previous button
155: next button
160: type selection portion
170: testing image display portion
171: zoom button
171A: zoom-in button
171B: zoom-out button
172: occurrence area
173: type selection portion
180: evaluation target selection portion
190: prediction time selection portion
191: prediction button
AR: arrow
C: circle
DC: distribution curve
DC0: distribution curve
DC1: distribution curve
DCA: distribution curve
DCB distribution curve
DCx: distribution curve
E: rectangle
H: histogram
HA: histogram
IM: testing image (X-ray transmission image)
Lth: straight line indicating reference value (threshold value) of defect
PK_1: extreme value
Pk_2: extreme value
R: ellipse
SM: segmentation mask
Th: reference value

## Claims

1. An information processing apparatus comprising:
a processor,
wherein the processor
acquires first information including information on severity of a discontinuity obtained by analyzing an image obtained by imaging an object,
calculates a distribution of the severity of the discontinuity based on the first information,
acquires information on a threshold value of a defect,
generates second information in which the distribution of the severity of the discontinuity and the threshold value are displayed, and
displays the second information.

2. The information processing apparatus according to claim 1,
wherein the processor generates the second information by generating a graph showing the distribution of the severity of the discontinuity, and indicating a position of the threshold value on the graph.

3. The information processing apparatus according to claim 2,
wherein the processor calculates a curve showing the distribution of the severity of the discontinuity by using curve regression.

4. The information processing apparatus according to claim 2 or 3,
wherein the processor calculates a histogram showing the distribution of the severity of the discontinuity.

5. The information processing apparatus according to any one of claims 1 to 4,
wherein the processor calculates a distribution of a peak closest to the threshold value in a case in which the distribution of the severity of the discontinuity has multimodality.

6. The information processing apparatus according to any one of claims 1 to 5,
wherein the processor
acquires the first information of a plurality of the objects,
receives designation of the object of which the second information is to be displayed, and
displays the second information of the designated object.

7. The information processing apparatus according to claim 6,
wherein the processor
receives designation of the plurality of obj ects, and
generates the second information in which the distributions of the severity of the discontinuity of the designated plurality of objects are displayed.

8. The information processing apparatus according to claim 6 or 7,
wherein the first information includes information on a date and time at which the object is tested or manufactured or a number for identifying the object, and
the processor receives designation of the object of which the second information is to be displayed by using the date and time or the number.

9. The information processing apparatus according to claim 8,
wherein the processor
displays a slider, and
displays the second information by switching the second information in a date-and-time order or in a number order in response to movement of the slider.

10. The information processing apparatus according to claim 8 or 9,
wherein the processor
estimates a distribution of the severity of the discontinuity at a specific point in time in future based on the first information of the plurality of obj ects, and
generates the second information in which the estimated distribution of the severity of the discontinuity at the specific point in time in future is displayed.

11. The information processing apparatus according to claim 9 or 10,
wherein the processor
receives designation of a specific point in time in future, and
estimates a distribution of the severity of the discontinuity at the designated point in time.

12. The information processing apparatus according to any one of claims 1 to 11,
wherein the first information includes information on severity for each type of the discontinuity for a plurality of types of the discontinuities, and
the processor
calculates a distribution of the severity for each type of the discontinuity based on the first information,
receives designation of the type of the discontinuity to be displayed, and
generates the second information in which the distribution of the severity of the designated type of the discontinuity and the threshold value are displayed.

13. The information processing apparatus according to any one of claims 1 to 12,
wherein the first information includes information on a plurality of types of the severity, and
the processor
acquires information on a threshold value of a defect for each type of the severity,
calculates a distribution for each type of the severity based on the first information,
receives designation of the type of the severity to be displayed, and
generates the second information in which the distribution of the severity of the designated type and the threshold value are displayed.

14. The information processing apparatus according to any one of claims 1 to 13,
wherein the first information includes the image, and
the processor generates the second information in which the image is further displayed.

15. The information processing apparatus according to claim 14,
wherein the first information includes information on an occurrence area of the discontinuity, and
the processor displays the information indicating the occurrence area of the discontinuity on the image.

16. The information processing apparatus according to claim 15,
wherein the first information includes information on an occurrence area for each type of the discontinuity, and
the processor displays the information indicating the occurrence area of the discontinuity on the image in different aspects for each type of the discontinuity.

17. The information processing apparatus according to any one of claims 1 to 16,
wherein the image is a radiation transmission image.

18. The information processing apparatus according to any one of claims 1 to 17,
wherein a type of the discontinuity is any of a gas hole, a porosity, an FMLD, or an FMMD.

19. The information processing apparatus according to any one of claims 1 to 18,
wherein the severity of the discontinuity is any of a length, an area, a degree of distortion, a sharpness of a shape, or a density of the discontinuity.

20. An information processing method comprising:
a step of acquiring first information including information on severity of a discontinuity obtained by analyzing an image obtained by imaging an object;
a step of calculating a distribution of the severity of the discontinuity based on the first information;
a step of acquiring information on a threshold value of a defect;
a step of generating second information in which the distribution of the severity of the discontinuity and the threshold value are displayed; and
a step of displaying the second information.

21. An information processing program causing a computer to realize:
a function of acquiring first information including information on severity of a discontinuity obtained by analyzing an image obtained by imaging an object;
a function of calculating a distribution of the severity of the discontinuity based on the first information;
a function of acquiring information on a threshold value of a defect;
a function of generating second information in which the distribution of the severity of the discontinuity and the threshold value are displayed; and
a function of displaying the second information.

22. A non-transitory computer-readable recording medium on which the program according to claim 21 is recorded.

## Amended claims

### Amended claims under Art. 19.1 PCT

1. An information processing apparatus comprising:
a processor,
wherein the processor
acquires first information including information on severity of a discontinuity obtained by analyzing an image obtained by imaging an object,
calculates a distribution of the severity of the discontinuity based on the first information,
acquires information on a threshold value of a defect,
generates second information in which the distribution of the severity of the discontinuity and the threshold value are displayed, and
displays the second information.

2. The information processing apparatus according to claim 1,
wherein the processor generates the second information by generating a graph showing the distribution of the severity of the discontinuity, and indicating a position of the threshold value on the graph.

3. The information processing apparatus according to claim 2,
wherein the processor calculates a curve showing the distribution of the severity of the discontinuity by using curve regression.

4. The information processing apparatus according to claim 2 or 3,
wherein the processor calculates a histogram showing the distribution of the severity of the discontinuity.

5. The information processing apparatus according to any one of claims 1 to 4,
wherein the processor calculates a distribution of a peak closest to the threshold value in a case in which the distribution of the severity of the discontinuity has multimodality.

6. The information processing apparatus according to any one of claims 1 to 5,
wherein the processor
acquires the first information of a plurality of the objects,
receives designation of the object of which the second information is to be displayed, and
displays the second information of the designated object.

7. The information processing apparatus according to claim 6,
wherein the processor
receives designation of the plurality of obj ects, and
generates the second information in which the distributions of the severity of the discontinuity of the designated plurality of objects are displayed.

8. The information processing apparatus according to claim 6 or 7,
wherein the first information includes information on a date and time at which the object is tested or manufactured or a number for identifying the object, and
the processor receives designation of the object of which the second information is to be displayed by using the date and time or the number.

9. The information processing apparatus according to claim 8,
wherein the processor
displays a slider, and
displays the second information by switching the second information in a date-and-time order or in a number order in response to movement of the slider.

10. The information processing apparatus according to claim 8 or 9,
wherein the processor
estimates a distribution of the severity of the discontinuity at a specific point in time in future based on the first information of the plurality of objects, and
generates the second information in which the estimated distribution of the severity of the discontinuity at the specific point in time in future is displayed.

11. The information processing apparatus according to claim 9 or 10,
wherein the processor
receives designation of a specific point in time in future, and
estimates a distribution of the severity of the discontinuity at the designated point in time.

12. The information processing apparatus according to any one of claims 1 to 11,
wherein the first information includes information on severity for each type of the discontinuity for a plurality of types of the discontinuities, and
the processor
calculates a distribution of the severity for each type of the discontinuity based on the first information,
receives designation of the type of the discontinuity to be displayed, and
generates the second information in which the distribution of the severity of the designated type of the discontinuity and the threshold value are displayed.

13. The information processing apparatus according to any one of claims 1 to 12,
wherein the first information includes information on a plurality of types of the severity, and
the processor
acquires information on a threshold value of a defect for each type of the severity,
calculates a distribution for each type of the severity based on the first information, receives designation of the type of the severity to be displayed, and
generates the second information in which the distribution of the severity of the designated type and the threshold value are displayed.

14. The information processing apparatus according to any one of claims 1 to 13,
wherein the first information includes the image, and
the processor generates the second information in which the image is further displayed.

15. The information processing apparatus according to claim 14,
wherein the first information includes information on an occurrence area of the discontinuity, and
the processor displays the information indicating the occurrence area of the discontinuity on the image.

16. The information processing apparatus according to claim 15,
wherein the first information includes information on an occurrence area for each type of the discontinuity, and
the processor displays the information indicating the occurrence area of the discontinuity on the image in different aspects for each type of the discontinuity.

17. The information processing apparatus according to any one of claims 1 to 16,
wherein the image is a radiation transmission image.

18. The information processing apparatus according to any one of claims 1 to 17,
wherein a type of the discontinuity is any of a gas hole, a porosity, an FMLD, or an FMMD.

19. The information processing apparatus according to any one of claims 1 to 18,
wherein the severity of the discontinuity is any of a length, an area, a degree of distortion, a sharpness of a shape, or a density of the discontinuity.

20. An information processing method comprising:
a step of acquiring first information including information on severity of a discontinuity obtained by analyzing an image obtained by imaging an object;
a step of calculating a distribution of the severity of the discontinuity based on the first information;
a step of acquiring information on a threshold value of a defect;
a step of generating second information in which the distribution of the severity of the discontinuity and the threshold value are displayed; and
a step of displaying the second information.

21. An information processing program causing a computer to realize:
a function of acquiring first information including information on severity of a discontinuity obtained by analyzing an image obtained by imaging an object;
a function of calculating a distribution of the severity of the discontinuity based on the first information;
a function of acquiring information on a threshold value of a defect;
a function of generating second information in which the distribution of the severity of the discontinuity and the threshold value are displayed; and
a function of displaying the second information.

22. A non-transitory computer-readable recording medium on which the program according to claim 21 is recorded.

23. (Added) The information processing apparatus according to any one of claims 1 to 18,
wherein the processor
acquires as the first information, information including information on severity of each discontinuity existing in the object, obtained by analyzing the image,
calculates the distribution of the severity of the discontinuity based on the first information, and
generates as the second information, information in which the distribution of the severity of the discontinuity existing in the object and the threshold value are displayed.

24. (Added) The information processing apparatus according to any one of claims 1 to 18,
wherein, the processor
acquires for each of a plurality of obj ects, as the first information, information including:
information on severity of discontinuity obtained by analyzing the image; and
information on a date and time at which the object is tested or manufactured or a number for identifying the object,
calculates for each of the plurality of objects, the distribution of the severity of the discontinuity based on the first information,
generates the second information for each of the plurality of obj ects, and
displays the second information by switching the second information in a date-and-time order or a number order in response to an instruction to switch display.

Statement under Art. 19.1 PCT
Claim 23 clarifies that the "distribution of the severity of the discontinuity" in claim 1 means "distribution of the severity of the discontinuity existing in the object" based on matters written in paragraph [0040] in the original description.

Claim 24 newly recites an invention based on matters written in paragraphs [0091] and [0115] in the original description.
